Europäisches Patentamt

European Patent Office

Office européen des brevets

(11) Veröffentlichungsnummer: **0 512 276 A2**

# EUROPÄISCHE PATENTANMELDUNG

(21) Anmeldenummer: **92106216.2**

(22) Anmeldetag: **10.04.92**

(51) Int. Cl.5: **G01C 21/16**

(30) Priorität: **02.05.91 DE 4114361**

(43) Veröffentlichungstag der Anmeldung:
**11.11.92 Patentblatt 92/46**

(84) Benannte Vertragsstaaten:
**DE FR GB NL**

(71) Anmelder: **ATLAS ELEKTRONIK GMBH**
**Sebaldsbrücker Heerstrasse 235**
**W-2800 Bremen 44(DE)**

(72) Erfinder: **Harre, Ingo, Dipl.-Ing.**
**Pössnecker Strasse 14**
**W-2800 Bremen 41(DE)**

(54) Verfahren und Vorrichtung zur Lagemessung eines Fahrzeugs.

(57) Bei Fahrzeugen, die zur Tiefenlotung von Bodenprofilen im Meer durch Schrägortung eingesetzt werden, muß ihre genaue Lage im Seegang vermessen werden. Die dafür benutzten und in ihrer Eigenbewegung kompensierten Kreiselpendel sind technisch besonders aufwendig. Daher werden am Fahrzeug einfache Pendelsensoren und präzise Winkelgeschwindigkeitssensoren voneinander getrennt angebracht, Stampf- und Rollwinkelsignale aufgrund zweier unterschiedlicher Meßprinzipien gemessen und die zugehörigen Lagewinkel unter Verwendung geeigneter Filter ermittelt.

Die Erfindung betrifft Meßverfahren zum Bestimmen der Lage eines Fahrzeugs nach dem Oberbegriff des Anspruchs 1 und eine Meßvorrichtung zur Ausübung des Verfahrens.

Auf Forschungs- und Vermessungsfahrzeugen, die während der Fahrt Meerestiefen vermessen, werden Fächerlote eingesetzt, mit denen die Wassertiefe durch Schrägortung des Meeresbodens bestimmt wird. Dabei wird das Bodenprofil durch fächerförmige, gleichzeitige Lotung einer Vielzahl von Punkten erfaßt. Für ein derartiges Meßverfahren ist es erforderlich, die Schiffsbewegung aufgrund des Seegangs möglichst genau zu ermitteln, da eine unbekannte Auslenkung der Meßwandler und damit der Fächerlotstrahlen Fehler bei der Tiefenberechnung bedingen.

Bei einem derartigen Meßverfahren wird die Lage des Fahrzeugs, üblicherweise horizontbezogen, durch seine Lagewinkel und den Hub, bezogen auf eine mittlere Ruhelage, dargestellt. Als Lagewinkel werden hier der Stampfwinkel, das ist eine Verdrehung des Fahrzeugs aus der Horizontallage um seine Querachse, und der Rollwinkel, das ist eine Verdrehung des Fahrzeugs aus der Horizontallage um seine Längsachse, angesehen. Der Hub gibt die Auslenkung des Fahrzeuges in Lotrichtung an.

Grundsätzlich wäre es vorstellbar, hochgenaue Drehgeschwindigkeitssensoren im Hafen bei absoluter Ruhelage des Fahrzeugs unmittelbar vor Missionsbeginn einzuschalten, zu eichen und die genaue Lage des Fahrzeugs ständig mitzukoppeln. Die sich daraus ergebende Konsequenz, die Horizontsensoren während der gesamten Fahrt nicht abschalten zu dürfen, ist jedoch eine unpraktikable Forderung.

Es ist aus der deutschen Patentschrift DE 33 22 632 bekannt, zum Bestimmen von Lagewinkeln ein kreiselstabilisiertes Pendel einzusetzen und es außer als Kursreferenz auch als Horizontsensor zu verwenden. Bei Beschleunigung des Fahrzeugs im Seegang erfahren derartige, als Horizontsensoren eingesetzte Pendel jedoch eine Auslenkung, die sich erst nach einer Abklingzeit wieder abgebaut hat. Während dieser Abklingzeit ist der Horizontsensor mit einem Fehler behaftet, der zu Meßfehlern der Lagewinkel des Fahrzeugs führt. Beim Stand der Technik ist es deshalb vorgesehen, die Beschleunigung des Pendels direkt dadurch zu messen, daß an dem Pendel Winkelgeschwindigkeitssensoren angebracht werden, um seine eigene Winkelgeschwindigkeit zu bestimmen und für eine Fehlerkorrektur nutzbar zu machen. Diese Meßeinrichtung erfordert die Verwendung eines hochgenauen, stabilisierten Kreiselpendels mit zusätzlich montierten Winkelgeschwindigkeitssensoren. Eine derartige Konstruktion ist bereits mechanisch sehr aufwendig und muß darüber hinaus mit erheblicher meßtechnischer Präzision ausgestattet sein.

Der Erfindung liegt die Aufgabe zugrunde, ein vereinfachtes Meßverfahren anzugeben, mit dem die großen Genauigkeitsforderungen der Vermessungstechnik erfüllt werden und bei dem der konstruktive Aufwand der Meßeinrichtung verringert werden kann.

Diese Aufgabe wird durch die im Kennzeichenteil des Anspruchs 1 angegebenen Merkmale gelöst.

Die Vorteile des erfindungsgemäßen Verfahrens bestehen darin, daß die Lagewinkel mit zwei voneinander unabhängigen Systemen und Meßprinzipien gemessen werden. Zum einen werden die Lagewinkel als absolute, jedoch beschleunigungsabhängige Werte des Pendels gemessen und mit dieser Messung ein Anfangs- oder Eichwert der Lagewinkel bestimmt. Zum anderen werden durch die relativ messenden, linearbeschleunigungsunabhängigen Winkelgeschwindigkeitssensoren Momentanwerte der Lagewinkel ermittelt, wobei die gemessenen Winkelgeschwindigkeiten z.B. zu Lagewinkeln integriert werden können.

Diese Sensoren beeinflussen sich nicht gegenseitig, da sie voneinander unabhängig auf dem Fahrzeug angebracht worden sind, so daß auch ihre Meßsignale ausschließlich durch die Fahrzeugbewegung bestimmt werden.

Für die beiden in diesem Zusammenhang relevanten Achsen der Fahrzeugbewegung, d.h. der Längsachse für die Rollbewegung und der Querachse für die Stampfbewegung, können darüber hinaus jeweils gleiche Pendel- und Winkelgeschwindigkeitssensoren eingesetzt werden. Auch die Filterung und Verarbeitung der Sensorsignale kann völlig parallel nach jeweils gleichartigen Verfahren erfolgen.

Die Meßeinrichtung kann zu jedem Zeitpunkt und bei jeder Lage und Bewegung des Fahrzeugs eingeschaltet werden und nach einer geringen Einlaufzeit der Sensoren die Messung durchführen. Dabei arbeiten die Winkelgeschwindigkeitssensoren als Präzisionsmesser und die Pendelsensoren als absolute Lotreferenz. Da die Pendelsensoren jedoch beschleunigungsabhängig sind, müssen sie während der Einlaufzeit "beobachtet" werden, d.h. es muß durch Mittelung über die Einlaufzeit und ggf. durch Regressionsrechnung die absolute Lotrichtung bestimmt werden. Die relative Winkelmessung der Winkelgeschwindigkeitssensoren werden dann um den absoluten Lotwinkel der Pendelsensoren korrigiert oder anders ausgedrückt, der Anfangswert für die relative Lagewinkelmessung mit den Winkelgeschwindigkeitssensoren wird durch die Pendelsensoren vorgegeben.

Es ist daher nur ein präziser und beschleunigungsunabhängiger Meßsensor, der Winkelgeschwindigkeitssensor, erforderlich. Von dem zweiten Sensor muß keine Beschleunigungsunabhängigkeit mehr gefordert werden, da seine über einen längeren Zeitraum gemittelten Meßwerte hauptsächlich als Lotreferenz dienen und gemeinsam mit den Meßwerten der ersten Meßeinrichtung im nachgeschalteten Filterverfahren zu einem präzisen Schätzwert des jeweiligen Lagewinkels signalverarbeitungstechnisch verbessert werden können.

Weitere vorteilhafte Ausgestaltungen der Erfindung ergeben sich aus den Unteransprüchen.

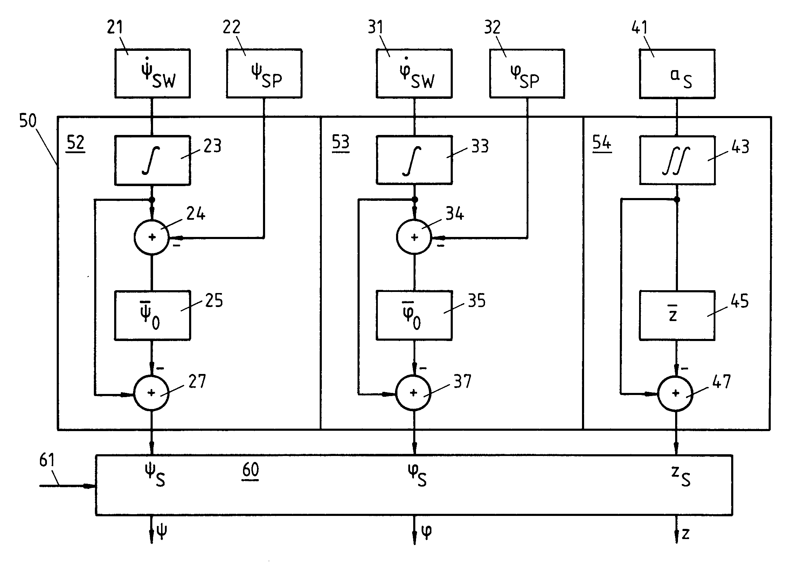

Die Erfindung wird anhand eines in der Zeichnung dargestellten Ausführungsbeispiels beschrieben.

Die Zeichnung zeigt ein Blockschaltbild einer Meßeinrichtung für ein Lagemeßverfahren von Fahrzeugen.

Für ein solches Meßverfahren sind zum Ermitteln des Stampfwinkels und des Rollwinkels in völlig parallelem Aufbau der Meßeinrichtung Winkelgeschwindigkeitssensoren 21, 31 und Pendelsensoren 22, 32 vorgesehen. Aufgrund einer Bewegung des Fahrzeugs um seine Querachse erzeugt der Winkelgeschwindigkeitssensor 21 ein Winkelgeschwindigkeitssignal $\dot{\psi}_{SW}$ und der Pendelsensor 22 ein Pendelwinkelsignal $\psi_{SP}$. Der Winkelgeschwindigkeitssensor 31 und der Pendelsensor 32 sind derart am Fahrzeug angebracht, daß sie die Drehbewegung des Fahrzeugs um seine Längsachse messen. Damit wird von dem Winkelgeschwindigkeitssensor 31 das Winkelgeschwindigkeitssignal $\dot{\phi}_{SW}$ und von dem Pendelsensor 32 das Pendelwinkelsignal $\phi_{SP}$ erzeugt. Zur Hubmessung ist ein Beschleunigungssensor 41 vorgesehen, der die vertikale Beschleunigung $a_s$ in der vertikalen Fahrzeugachse, der Schiffshochachse, mißt.

Die Winkelgeschwindigkeitssignale $\dot{\psi}_{SW}$ und $\dot{\phi}_{SW}$, die Pendelsignale $\psi_{SP}$ und $\phi_{SP}$ sowie die Beschleunigung $a_S$ in der vertikalen Schiffshochachse werden einem Filter 50 zugeführt, indem die Winkelgeschwindigkeitssignale $\dot{\psi}_{SW}$, $\dot{\phi}_{SW}$ und die Pendelwinkelsignale $\psi_{SP}$ und $\phi_{SP}$ verknüpft und jeweils der schiffsbezogene Stampfwinkel $\psi_S$, der Rollwinkel $\phi_S$ und der schiffsbezogene Hub $z_S$ als Daten für die Lage des Fahrzeugs gebildet werden. Diese Lagedaten werden dann in einer Transformationseinrichtung 60 mit über die Eingangsleitung 61 aufgeschalteten Schiffseigendaten, wie Position, Kurs und Geschwindigkeit, transformiert, um auf diese Weise absolute horizontbezogene und schiffsvoraus- oder kursbezogene Lagedaten für den Stampfwinkel $\psi$, den Rollwinkel $\phi$ und den Hub $z$ zu bestimmen.

Die Winkelgeschwindigkeitssensoren 21, 31 und die Pendelsensoren 22, 32 werden völlig unabhängig voneinander am Fahrzeug angebracht, so daß bei der Verarbeitung durch das Filter 50 jeweils der schiffsbezogene Stampf- bzw. Rollwinkel nach zwei unterschiedlichen Meßprinzipien gewonnen wird.

In dem hier im einzelnen dargestellten Ausführungsbeispiel wird das Filter 50 in drei Teilfilter 52, 53 und 54 unterteilt, von denen die Teilfilter 52 und 53 prinzipiell gleichen Aufbau haben. In dem Teilfilter 52 wird das Winkelgeschwindigkeitssignal $\dot{\psi}_{SW}$ in einem Integrator 23 integriert. Das Ausgangssignal des Integrators 23 ist ein Momentanwert $\psi_{SW} + \psi_0$ des Stampfwinkels und weist eine Integrationskonstante $\psi_0$ auf, die für den relativ messenden Winkelgeschwindigkeitssensor 21 vom Einschaltzeitpunkt der Meßeinrichtung abhängig ist. Außerdem werden verschiedene systematische Fehleranteile mitgemessen, z.B. der von der geographischen Breite und vom Kurs abhängige, integrierte Anteil der Erddrehgeschwindigkeit. In einer Vergleichseinrichtung 24 wird der Momentanwert des Stampfwinkelsignals $\psi_{SW} + \psi_0$ mit dem Pendelwinkelsignal $\psi_{SP}$ verglichen und die Differenz gebildet, die einen momentanen Fehler zwischen der Winkelgeschwindigkeits- und der Pendelmessung darstellt. Da das Pendelwinkelsignal $\psi_{SP}$ beschleunigungsabhängig ist, ist auch die Differenz in gleicher Weise von Beschleunigungen in der Schiffslängsachse beeinflußt. In einem Glättungsfilter 25 wird das Ausgangssignal der Vergleichseinrichtung 24 in einem statistischen Ausgleichsverfahren, z.B. durch Regressionsrechnung, gemittelt und vorzeichenrichtig, also nach Invertierung des Ausgangssignals des Glättungsfilters 25, in der Additionsstufe 27 verarbeitet. Das Ausgangssignal der Additionsstufe 27 stellt dann den genauen schiffsbezogenen Stampfwinkel $\psi_S$, frei von den genannten systematischen Fehleranteilen, dar.

Das Teilfilter 53 integriert für die Rollwinkelmessung das Winkelgeschwindigkeitssignal $\dot{\phi}_{SW}$ zum Momentanwert des Rollwinkelsignals $\phi_{SW} + \phi_0$ von dem in der Vergleichsstufe 34 das Pendelwinkelsignal $\phi_{SP}$ abgezogen wird. Die Differenz wird dem statistischen Glättungsfilter 35 zugeführt und somit ein Mittelwert der Integrationskonstanten $\bar{\phi}_0$ gebildet. In der Additionsstufe 37 wird zum Ausgangssignal des Integrators 33 der invertierte Mittelwert des Glättungsfilters 35 addiert und als Ausgangssignal der Rollwinkel $\phi_S$ gebildet.

In dem dritten Teilfilter 54 des Filters 50 wird das Beschleunigungssignal $a_S$ des Beschleunigungssensors 41 einem Zweifachintegrator 43 zugeführt, um durch die doppelte Integration der Beschleunigung ein Hubsignal zu ermitteln. Dieses Hubsignal ist ebenfalls um eine Anfangskonstante verfälscht und wird in einem Hubglättungsfilter 45 gemittelt. Aus der Differenz zwischen Ausgangssignal der Doppelintegrationsstufe 43 und dem Ausgangssignal des Hubglättungsfilters 45, die in der Additionsstufe 47 gebildet wird, ergibt sich dann die schiffsbezogene Hubkomponente $z_S$. Aus dieser Hubkomponente $Z_S$ wird dann durch trigonometrische Umrechnung mit dem Stampfwinkel $\psi_S$ und dem Rollwinkel $\phi_S$ durch die Transformationseinrichtung 60 der Hub Z in Lotrichtung bestimmt.

Die bei dieser Meßeinrichtung bevorzugt verwendeten Pendelsensoren sind als Schwerkraftpendel von sehr einfachem Aufbau. Aufgrund dieses Meßprinzips, d.h. der Schwerkraftausrichtung, nehmen sie, wenn sie nicht durch Beschleunigungen beeinträchtigt werden, stets die durch den Gravitationsvektor vorgegebene Lage ein. Dabei sind die durch die Pendelsensoren 22 und 32 gemessenen Winkel im allgemeinen von begrenzter Genauigkeit und müssen durch Filterung ausgeglichen werden.

Nach einem völlig anderen Meßprinzip arbeiten die Winkelgeschwindigkeitssensoren 21 und 31. Diese Winkelgeschwindigkeitssensoren 21, 31 sind als Glasfaserkreiselsensoren ausgebildet und hochpräzise Winkelgeschwindigkeitsmesser. Der Einfluß von linearen Beschleunigungen auf diese Winkelgeschwindigkeitsmeßsensoren ist jedoch zu vernachlässigen. Damit stehen zur Messung des Roll- und Stampfwinkels zwei grundsätzlich verschiedene Meßprinzipien zur Verfügung, von denen das eine, der Pendelsensor, absolute Meßwerte liefert, deren Fehler durch Langzeitbeobachtung ausgeglichen werden können und von denen das andere eine hochpräzise Relativmessung liefert, deren Anfangswertkonstante durch Vergleich mit dem Pendelsensor ermittelt werden muß.

In anderen, im einzelnen nicht dargestellten Ausführungsformen des Filters 50 können für die Verarbeitung der Sensorsignale der Sensoren 21, 22, 31, 32, 41 grundsätzlich unterschiedliche Verfahren angewendet werden. So können das Filter 50 oder zumindest die Filter 52 und 53 als Schätzfilter beispielsweise als $\alpha/\beta$-Filter oder als Kalmann-Filter modelliert werden, wie in der Literatur vielfach beschrieben. Dabei werden dann dem Schätzfilter als eingangsseitige Zustandsvariablen die Winkelgeschwindigkeitssignal $\dot\psi_{SW}$ und $\dot\phi_{SW}$, die Pendelwinkelsignale $\psi_{SW}$ und $\phi_{SP}$ sowie die Beschleunigung $a_S$ in der Schiffshochachse zugeführt. Das Ergebnis eines derartigen Filterprozesses stellen dann die horizontbezogenen Stampfwinkel $\psi_S$ und Rollwinkel $\phi_S$ sowie der Hub Z dar, die als Ausgangsvariablen des Filters gebildet werden.

In dieser Ausbildung des Filters 50 können durch ständigen Vergleich der eingekoppelten Meßwerte der voneinander unabhängigen Sensoren 21, 22, 31, 32, 41 systemspezifische Meßfehler, z.B. Beschleunigungsfehler der Pendel 22, 32 oder Drift der Winkelgeschwindigkeitssensoren 21, 31 erkannt und Ausgangsvariablen erzeugt werden, die frei von Systemfehlern sind.

Aber auch Pendelsensoren, deren einziges Pendel vollkardanisch aufgehängt ist und die Pendelwinkelsignale für zwei zueinander orthogonale Bewegungsrichtungen generieren, sind einsetzbar, wenn eine von der Winkelgeschwindigkeit unabhängige Messung gewahrt ist.

Werden als Winkelgeschwindigkeitssensoren 21, 31 sogenannte "integrierende" Winkelgeschwindigkeitssensoren eingesetzt, die eine der Winkelgeschwindigkeit proportionale Pulsfrequenz und ein Zählrichtungssignal liefern, so können statt der Integrationsstufen 23, 33 einfache, digitale Vorwärts-Rückwärtszähler eingesetzt werden. Bei einer zusätzlichen A/D-Wandlung der Pendelwinkelsignale $\psi_{SP}$ und $\phi_{SP}$ können dann auch die Teilfilter 53, 54 als digitale Filter ausgebildet sein.

**Patentansprüche**

1. Meßverfahren für die Lage eines Fahrzeugs, insbesondere von Rollwinkel, Stampfwinkel und Hub, unter Verwendung von mindestens einem Pendelsensor und mehreren Winkelgeschwindigkeitssensoren, dadurch gekennzeichnet, daß Pendelsensor (22, 32) und Winkelgeschwindigkeitssensoren (21, 31) voneinander entkoppelt am Fahrzeug angebracht werden, daß mit dem mindestens einen Pendelsensor (21, 31) einerseits Stampf- und andererseits Rollwinkelsignale als Pendelwinkelsignale ($\psi_{SP}$, $\phi_{SP}$) und mit den Winkelgeschwindigkeitssensoren (21, 31) Winkelgeschwindigkeitssignale ($\dot\psi_{SW}$, $\dot\phi_{SW}$) um die Quer- und Längsachse des Fahrzeugs im wesentlichen gleichzeitig gemessen werden, daß jeweils aus dem Rollwinkelsignal ($\phi_{SP}$) und dem Winkelgeschwindigkeitssignal ($\dot\phi_{SW}$) um die Längsachse ein Rollwinkel ($\phi_S$) und aus dem Stampfwinkelsignal ($\psi_{SP}$) und dem Winkelgeschwindigkeitssignal ($\dot\psi_{SW}$) um die Querachse ein Stampfwinkel ($\psi_S$) des Fahrzeugs ermittelt wird und daß mit einem in der Schiffshochachse messenden Beschleunigungssensor (41) eine Beschleunigung ($a_S$) gemessen und daraus der vertikale Hub (Z) in Lotrichtung ermittelt wird.

2. Meßverfahren nach Anspruch 1, dadurch gekennzeichnet, daß aus den Winkelgeschwindigkeitssignalen ($\dot\psi_{SW}$, $\dot\phi_{SW}$) um die Quer- und Längsachse jeweils ein Momentanwert für Stampf- oder Rollwinkel gebildet wird und aus den Pendelwinkelsignalen ($\psi_{SP}$, $\phi_{SP}$) und den Momentanwerten jeweils ein mittlerer Anfangswert für Stampfwinkel oder Rollwinkel ermittelt werden, und daß mit dem jeweiligen Momentanwert und dem jeweiligen Anfangswert der Stampfwinkel ($\psi_S$) und der Rollwinkel ($\phi_S$) bestimmt werden.

3. Meßverfahren nach Anspruch 2, dadurch gekennzeichnet, daß zum Bilden der Momentanwerte die Winkelgeschwindigkeitssignale

($\dot{\psi}_{SW}$,$\dot{\phi}_{SW}$) integriert werden, daß zum Ermitteln des Anfangswertes eine Mittelung (Regression) einer Differenz von Pendelwinkelsignal ($\psi_{SP}$,$\phi_{SP}$) und Momentanwert durchgeführt wird und daß durch die Addition des Anfangswerts und des Momentanwerts der Stampfwinkel ($\psi_S$) bzw. Rollwinkel ($\phi_S$) gebildet wird.

4. Meßvorrichtung zum Ausüben des Verfahrens nach einem der Ansprüche 1 bis 3 mit mindestens einem Pendelsensor für Pendelwinkelsignale und mit Winkelgeschwindigkeitssensoren für Winkelgeschwindigkeitssignale, dadurch gekennzeichnet, daß sowohl der Pendelsensor (21, 31) als auch die Winkelgeschwindigkeitssensoren (22, 32) voneinander mechanisch entkoppelt mit dem Fahrzeug verbunden sind, daß der Pendelsensor (21, 31) und die Winkelgeschwindigkeitssensoren (22, 32) ausgangsseitig mit einem Filter (50) verbunden sind, daß das Filter (50) zur Bestimmung des Stampfwinkels ($\psi_S$) und des Rollwinkels ($\phi_S$) aus den Pendelwinkelsignalen ($\psi_{SP}$,$\phi_{SP}$) und den Winkelgeschwindigkeitssignalen ($\dot{\psi}_{SW}$,$\dot{\phi}_{SW}$) ausgebildet ist, daß ein in der Schiffshochachse messender Beschleunigungssensor (41) vorgesehen ist, der ausgangsseitig mit dem Filter (50) verbunden ist, und daß das Filter (50) zur Bestimmung einer Hubkomponente ($Z_S$) in der Schiffshochachse aus dem Ausgangssignal des Beschleunigungssensors (41) ausgebildet ist.

5. Meßvorrichtung nach Anspruch 4, dadurch gekennzeichnet, daß dem Filter (50) eine Transformationseinrichtung (60) nachgeschaltet ist, wobei die Transformationseinrichtung (60) einerseits zumindest zum Bestimmen des Hubs (Z) in Lotrichtung aus der Hubkomponente ($Z_S$) unter Berücksichtigung des Stampfwinkels ($\psi_S$) und des Rollwinkels ($\phi_S$) ausgebildet ist und andererseits vorzugsweise auch Transformationsmittel zur Bestimmung von Stampfwinkel ($\psi$) und Rollwinkel ($\phi$) in erdfesten Koordinaten aus dem schiffsbezogenen Stampfwinkel ($\psi_S$) und Rollwinkel ($\phi_S$) sowie den Schiffseigendaten aufweisen kann.

6. Meßvorrichtung nach Anspruch 4 oder 5, dadurch gekennzeichnet, daß das Filter (50) oder die Teilfilter (52, 53, 54) als Schätzfilter ausgebildet sind, den eingangsseitig als Zustandsvariablen Winkelgeschwindigkeitssignale ($\dot{\psi}_{SW}$,$\dot{\phi}_{SW}$), Pendelwinkelsignale ($\psi_{SP}$,$\phi_{SP}$) und die Beschleunigung ($a_S$) zugeführt werden und von den als Ausgangsvariablen der Rollwinkel ($\phi_S$), der Stampfwinkel ($\psi_S$) und die Hubkomponente ($Z_S$) ermittelt werden.

7. Meßvorrichtung nach Anspruch 6, dadurch gekennzeichnet, daß das Schätzfilter als Kalmanfilter oder $\alpha/\beta$-Filter ausgebildet ist.

8. Meßvorrichtung nach einem der Ansprüche 4 bis 7, dadurch gekennzeichnet, daß die Winkelgeschwindigkeitssensoren (21, 31) als optische Glasfaserkreisel ausgebildet sind.

9. Meßvorrichtung nach einem der Ansprüche 4 bis 8, dadurch gekennzeichnet, daß zwei getrennte Pendelsensoren (22, 32) zur getrennten Messung der Stampfwinkelsignale ($\psi_{SP}$) einerseits und der Rollwinkelsignale ($\phi_{SP}$) andererseits vorgesehen sind.

6